# EUROPÄISCHE PATENTANMELDUNG

(11) **EP 1 845 490 A1**
(43) Veröffentlichungstag der Anmeldung: **17.10.2007**
(21) Anmeldenummer: 07105906.7
(22) Anmeldetag: 10.04.2007
(51) Int. Cl.: G06Q 30/00

(54) **System und Verfahren zum automatischen Auslösen eines virtuellen Wahrnehmungsereignisses**

(30) Priorität: 06.04.2006 DE 102006016267
(71) Anmelder: Vis-A-Pix GmbH, 14473 Potsdam (DE)
(72) Erfinder: Keller, Ivo, 14548, Schwielowsee (DE)
(74) Vertreter: Hofmann, Andreas

(57) **Zusammenfassung**

Um ein System zum automatischen Auslösen eines Wahrnehmungsereignisses bei mindestens einer Beobachterinstanz (Bl) sowie ein zugeordnetes Verfahren so weiterzubilden, dass die Anzahl von kostenintensiven Realitätstests zwecks Fehlersuche (Aufnehmen von eigenen Signalsequenzen für verschiedene reale Analysesituationen) bei bereits installierten Systemen minimiert werden kann, wird vorgeschlagen, dass das System
- mindestens einen Sensor (S) zur Erfassung von Umgebungsdaten,
- mindestens eine Einheit (A) zur automatischen Analyse des Sensorsignals (1),
- mindestens eine Speichereinheit (D), in der eine Anzahl von Signalsequenzen und Abbildungsvorschriften gespeichert ist,
- mindestens eine Einheit (G) zur Generierung des Ausgabesignals oder veränderten Sensorsignals (5) sowie
- mindestens eine Einheit (W) zur Weiterleitung des Ausgabesignals oder veränderten Sensorsignals (5) an die Beobachterinstanz (BI) aufweist.

## Beschreibung

### Technisches Gebiet

Die vorliegende Erfindung betrifft ein System zum automatischen Auslösen eines Wahrnehmungsereignisses bei mindestens einer Beobachterinstanz sowie ein zugeordnetes Verfahren.

### Stand der Technik

Unter Werbung wird im Allgemeinen eine gezielte und bewusste Beeinflussung des Menschen verstanden. Die Wirtschaftswerbung befasst sich mit dem Transport von Werbebotschaften an eine Zielgruppe im Rahmen eines Unternehmens zur Erreichung eines bestimmten Ergebnisses: Kauf eines Produktes, Anforderung eines Kataloges, Absetzen einer Dienstleistung usw.

Das Konzept einer Werbekampagne richtet sich für gewöhnlich nach folgenden Anforderungen: Die Aufmerksamkeit des Menschen muss geweckt werden, die Werbebotschaft muss eine Relevanz für den Menschen und eine Kontinuität aufweisen sowie glaubwürdig und merkfähig sein. Durch die bisher verwendeten Medien konnten diese Anforderungen nur teilweise erfüllt werden bzw. die Erfüllung dieser Anforderungen hat zu hohen Kosten geführt.

Das Hauptproblem der Werbung ist die Tatsache, dass die Werbebotschaften für breite Zielgruppen ausgelegt werden und nicht auf einen konkreten Benutzer zugeschnitten sind: Als personenbezogene Information können bestenfalls die "persönliche Anrede" ("Frau Schnauf-Miller") oder der Benutzerprofil eingesetzt werden. Dies führt zu einer hohen Rate der Nichtbeachtung der Reklamebotschaften.

Die Informationslandschaft ist überfüllt, so dass für das Lenken der Aufmerksamkeit des Beworbenen auf ein konkretes Produkt oder eine Dienstleistung immer ausgefallene Strategien mit hohen Kosten ausgedacht werden müssen. Die klassischen Ansätze wie das mehrmalige Wiederholen der Werbebotschaft oder Referenzen auf prominente Verwender des Produktes haben sich verschlissen.

Oft wird es versucht, das Produkt visuell oder auditiv mit wünschenswerten Umständen zu verbinden, um es ebenso wünschenswert erscheinen zu lassen. Auf die Werbefigur wird die positive Eigenschaft des beworbenen Produktes, der beworbenen Dienstleistung projiziert, wobei sich der Mensch mit der Werbefigur identifizieren soll, was mit konventionellen Mitteln sehr schwer zu erreichen ist.

Bei den meisten klassischen Werbeansätzen sind auch eine Erfassung durch das System der Reaktionen des Beworbenen und/oder eine Interaktivität entweder gar nicht realisiert oder setzt eine Kooperation seitens des Beworbenen voraus: Diese Kooperation ist aber nur möglich, wenn der Beworbene bereits an einem konkreten Produkt oder Dienstleistung interessiert ist und somit das Ziel der Werbung bereits erreicht ist.

Dazu kommt die Tatsache, dass bei den klassischen Systemen die Erfassung von Reaktionen des Beworbenen für gewöhnlich über direkte Eingabegeräte realisiert wird, was das Beschädigen oder das Zerstören des Systems durch Vandalismus erleichtert.

Als weitere Nachteile der klassischen Werbeansätze können hohe Kosten für die Erstellung und die Verbreitung einer Werbebotschaft angeführt werden, so dass die kleinen und die mittelständischen Unternehmen kaum in der Lage sind, sich außer als in Zeitungsinseraten und Flugblättern zu bewerben. Die Planung und die Ausführung der Werbekampagne erfordern einen hohen Zeitaufwand und müssen mindestens mittelfristig erfolgen:

Auf die kurzfristigen Änderungen der Marktsituation kann nur schwer und unter einem zusätzlichen Zuwachs an Kosten eingegangen werden. Die kontinuierliche Verbreitung der Werbebotschaften durch die Inserenten selbst ist bei klassischen Ansätzen mit hohen Zusatzkosten verbunden, da teure Zusatzgeräte wie Reklamesäulen, interaktive Werbeautomaten usw. aufgestellt werden müssen.

Durch den Einsatz von konventionellen Werbemedien wie Zeitungen, Fernsehen, Radio, Außenwerbung werden die Anforderungen an die Werbebotschaften noch unzureichend erfüllt. Im Weiteren werden einige Beispiele für die bereits bestehenden Versuche der Lösung der aufgeführten Probleme aufgezählt.

Bei einigen Erfindungen ist zum Beispiel die Funktion der Interaktivität mit dem Beworbenen realisiert. In der Druckschrift DE 199 52 184 A1 aus dem Stand der Technik ist ein multimedialer und interaktiver Werbeautomat beschrieben. Das Gerät reagiert auf die Benutzereingaben über die konventionellen Eingabegeräte wie Tastatur, Joystick, Touchscreen-Monitor, Bedienknöpfe, Reglern, Mikrophon etc.

Die Druckschrift DE 101 33 096 A1 aus dem Stand der Technik betrifft einen interaktiven Schaukasten und eine Schauwand, wobei die Schauwand mindestens ein Fenster aufweist, durch das eine Anzeigevorrichtung für digitale Bild- oder Videosignale sichtbar ist, und eine

Signalquelle, die diese Signale erzeugt und vom Betrachter gesteuert werden kann. Die dem Beworbenen vorgeführten Werbebotschaften beziehen aber seine Person nicht mit ein, sie sind für Millionen von Kunden konzipiert worden, so dass eine hohe Rate an Nichtbeachtung der Werbebotschaften zu erwarten ist. Zu weiteren Nachteile gehört auch die Voraussetzung der Kooperation des Beworbenen, was nur selten gegeben ist.

Die Druckschrift DE 197 26 413 A1 aus dem Stand der Technik beschreibt ein multimediales Präsentationsgerät, das aus einem LCD-Display, einem Rechner und einem CD-ROM-Laufwerk besteht. Das Gerät bietet den Beworbenen eine Interaktivität durch die Möglichkeit einer Auswahl der Werbebotschaft über die Tastatur an, hat aber die gleichen Nachteile wie die im letzten Absatz beschriebenen Erfindungen. Zum ersten wird eine Kooperation des Beworbenen vorausgesetzt, zum zweiten kann auch hier von der Einbeziehung des Beworbenen in die Werbebotschaft oder seiner Identifikation mit der Werbefigur nicht die Rede sein.

Eine nichtkooperative Steuerung eines Werbegerätes ist bei der in der Druckschrift DE 195 04 923 A1 aus dem Stand der Technik beschriebenen Vorrichtung zum interaktiven Abrufen von Informationen, insbesondere zur Aufstellung an öffentlichen Straßen und Plätzen, realisiert. Dabei ist vorgesehen, dass die Informationen auf einer Speichereinrichtung gespeichert und über eine Datenverarbeitungseinrichtung und einen Flachbildschirm, wenigstens teilweise darstellbar sind.

Der Flachbildschirm wird mittels eine Temperatureinrichtung wahlweise gekühlt oder erwärmt, die Vorrichtung wird über einen Näherungssensor bei Nichtvorhandensein, Annäherung, Gegenwart und Entfernen von Personen in ihren Funktionen kontaktlos gesteuert. Eine weiterführende Analyse der Sensorinformationen findet aber nicht statt, so dass die kontaktlose Steuerung sich nur auf das Gerät selbst, nicht aber auf die Auswahl der Werbebotschaften bezieht.

Die in der Druckschrift DE 199 12 693 A1 aus dem Stand der Technik beschriebene Erfindung betrifft ein Verfahren und eine Vorrichtung zur öffentlichen Präsentation von authentischen "Live-Bild-Informationen" für Werbezwecke, bei dem die Inserenten der Werbebotschaften die Möglichkeit bekommen, ihre aktuellen Videoclips beliebig auszutauschen und in einem telekommunikativ vernetzten Verbund automatisiert zu verbreiten. Das Verfahren bietet zwar die Möglichkeit einer schnellen Reaktion auf die Änderungen der Marktsituation, bleibt aber in anderen Merkmalen konventionell.

Die beschriebenen Nachteile von klassischen Systemen der Herstellung und der Verbreitung von Werbebotschaften können durch den Einsatz von Technologien der Analyse von Sensorsignalen aufgehoben werden.

Systeme, welche auf einer Wahrnehmung der Ereignisse durch die Auswertung der von einem oder mehreren Sensoren zur Erfassung der realen Welt erzeugten Signale basieren, sind weit verbreitet. Seit einigen Jahrzehnten werden zum Beispiel Überwachungssysteme eingesetzt, bei denen eine Anzahl von verschiedenartigen Sensoren wie Drucksensoren, akustischen Glasbruchmelder, Infrarot-Bewegungsmeldern, akustischen Körperschallmelder, Videokameras usw. verwendet werden. Die gelieferten Informationen reichten aber bisher nicht aus, bzw. waren nicht so fehlerfrei, dass man auf eine Analyse der Situation seitens eines menschlichen Beobachters verzichten konnte.

Im letzten Jahrzehnt wurden verstärkt Versuche unternommen, eine komplexe Situationsanalyse durch eine automatische Auswertung der Sensorsignale zu realisieren. Durch die gestiegene Rechenleistung wurde es tatsächlich ermöglicht, automatische Analysesysteme aus dem Bereich der wissenschaftlichen Forschung in den Bereich der kommerziellen Vermarktung zu überführen. Diese Systeme sind aber bisher relativ unausgereift und teuer für den Endbenutzer, so dass für viele Einsatzbereiche noch keine ausgereiften Anwendungen existieren.

Die Qualität der in der letzten Zeit verstärkt entwickelten automatischen Analysesysteme schwankt beträchtlich und ist stark situationsabhängig. Die Beleuchtung, das Wetter, die Tageszeit, die Anzahl der Personen, die Art der Objekte, das Verkehrsaufkommen im Sensorerfassungsbereich - dies sind einige Beispiele für die Einflußfaktoren, die sich je nach der Sensorart stärker oder schwächer störend auswirken.

Die zur Zeit existierenden und uns bekannten Testsysteme und Testverfahren für die automatischen Analysesysteme beschäftigen sich vor allem mit dem Überprüfen der physikalischen Signaleigenschaften des Sensors wie zum Beispiel das Vorhandensein oder der Ausfall des Signals, nicht aber mit einer Analyse der Funktionalitäten und der Störungsrobustheit der Systeme.

Zum technologischen Hintergrund der vorliegenden Erfindung sei noch
- auf die Druckschrift EP 0 872 808 A1 aus dem Stand der Technik sowie
- auf die Druckschrift US 2003/0126013 A1 aus dem Stand der Technik
   aufmerksam gemacht.

### Darstellung der vorliegenden Erfindung: Aufgabe, Lösung, Vorteile (einschließlich bestem Weg zur Ausführung der vorliegenden Erfindung)

Die Aufgabe der vorliegenden Erfindung ist es, ein System und ein Verfahren zu entwickeln, die gleichzeitig mit der Erfüllung ihrer Hauptfunktionalität einer Verbesserung des dieser Hauptfunktionalität zu Grunde liegenden Analysekerns dienen können. Das System und das Verfahren sollen sowohl eine Unterstützung in der Entwicklung- und der Testphase leisten können als auch als ein Werkzeug der unabhängigen Qualitätskontrolle einsetzbar sein. Durch das System und durch das Verfahren soll die Anzahl von kostenintensiven Realitätstests zwecks Fehlersuche (Aufnehmen von eigenen Signalsequenzen für verschiedene - hier hunderte - reale Analysesituationen) bei den bereits installierten Systemen minimiert werden.

Die zuvor hergeleitete und aus dem Stand der Technik hervorgehende Aufgabe wird durch ein System gemäß Anspruch 1 sowie durch ein Verfahren gemäß Anspruch 9 gelöst.

Das System weist
- mindestens einen Sensor zur Erfassung von Umgebungsdaten,
- mindestens eine Einheit zur automatischen Analyse des Sensorsignals,
- mindestens eine Speichereinheit, in der eine Anzahl von Signalsequenzen und Abbildungsvorschriften gespeichert ist,
- mindestens eine Einheit zur Generierung des Ausgabesignals oder veränderten Sensorsignals sowie
- mindestens eine Einheit zur Weiterleitung des Ausgabesignals oder veränderten Sensorsignals an die Beobachterinstanz
   auf.

Die Beobachterinstanz kann sowohl ein menschlicher Beobachter als auch eine automatische Einheit zur Analyse des Sensorsignals sein, und es ist keine ausdrückliche Kooperation der Beobachterinstanz zur Erfüllung der Funktionalitäten des Systems und des Verfahrens notwendig.

Die vorliegende Erfindung beruht also auf dem Bereitstellen eines Systems und eines Verfahrens, welche ein automatisches Auslösen eines virtuellen Wahrnehmungsereignisses bei einer Beobachterinstanz ermöglichen, wobei die Beobachterinstanz sowohl eine automatische Einheit zur Analyse des Sensorsignals als auch ein menschlicher Beobachter sein kann und keine ausdrückliche Kooperation der Beobachterinstanz zur Erfüllung der Funktionalitäten des Systems notwendig ist.

Dem automatischen Analyseprogramm oder dem menschlichen Beobachter wird von ihm unaufgefordert ein Ereignis vorgetäuscht, das in der realen Welt nicht stattgefunden hat. Dies wird bei einem menschlichen Beobachter vorrangig zum Zwecke des Weckens seiner Aufmerksamkeit (zum Beispiel auf eine Werbebotschaft), bei einem automatischen Analyseprogramm zum Zwecke des Testes seiner Funktionalitäten verwendet, wobei der grundsätzliche Systemaufbau gleich bleibt. Mit Hilfe dieses Systems sowie dieses Verfahrens werden unter anderem neue Ansätze für die Werbeindustrie kostengünstig und effizient realisiert.

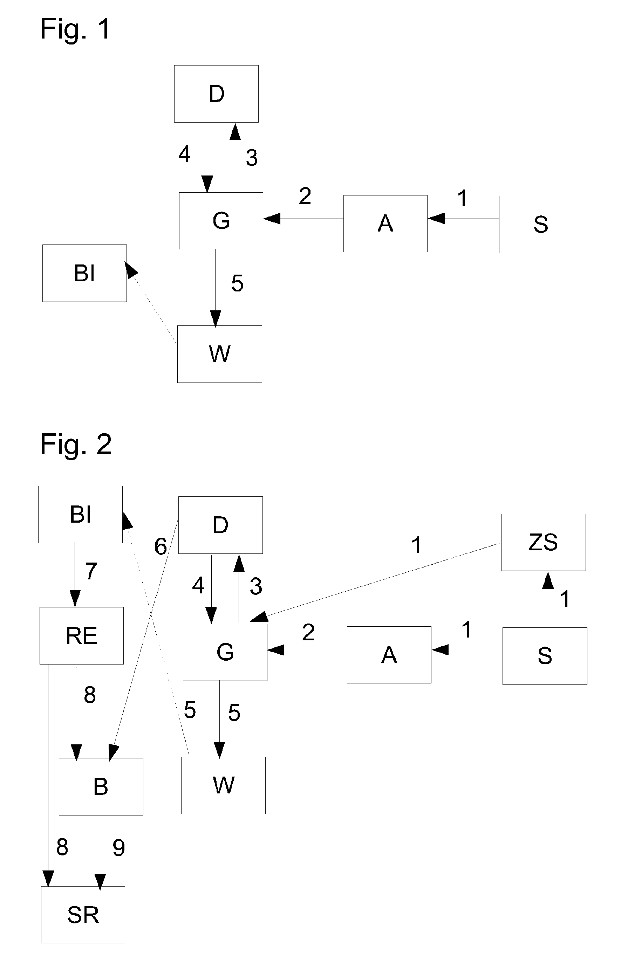

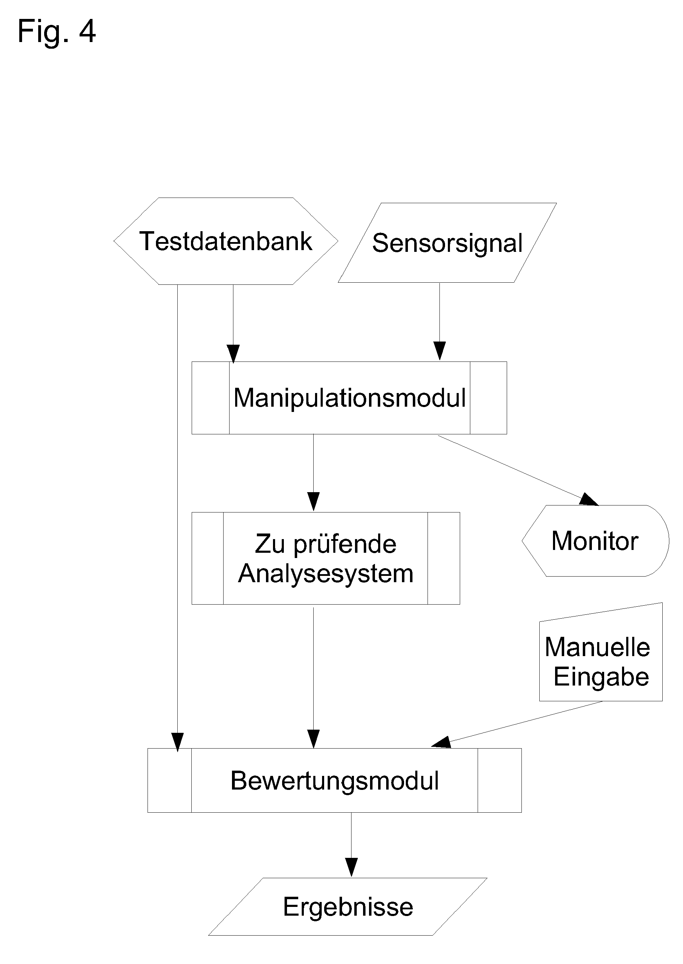

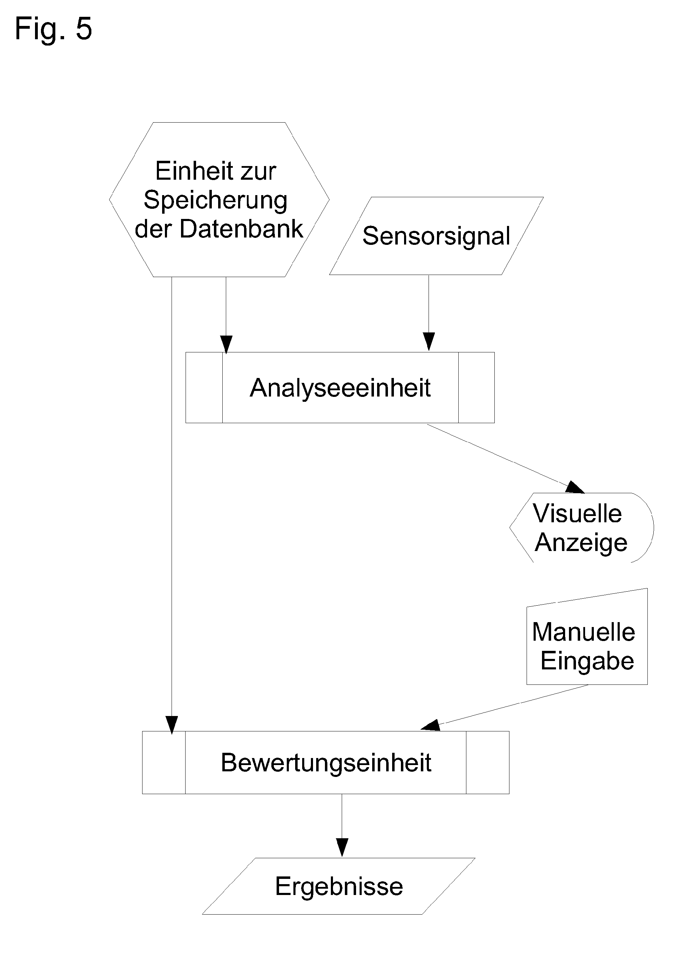

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend anhand der durch Fig. 1 bis Fig. 5 veranschaulichten Ausführungsbeispiele näher erläutert; gleiche oder ähnliche Ausgestaltungen, Elemente oder Merkmale sind in Fig. 1 bis Fig. 5 mit identischen Bezugszeichen versehen.

Der grundsätzlicher Systemaufbau ist in der Fig. 1 dargestellt.

Der Kern des Systems ist eine Einheit für eine automatische Analyse des Sensorsignals A. Die Analyseeinheit A verarbeitet das Sensorsignal 1 des Sensors S dahingehend, dass sie Kontextinformationen 2, die in der Einheit zur Generierung des Ausgabesignals G für die Erstellung einer Anfrage 3 an die Speichereinheit D, in der eine Anzahl von Signalsequenzen und Abbildungsvorschriften gespeichert ist, und für die Erstellung des Ausgabesignals 5 benötigt werden, extrahiert.

In der Speichereinheit D wird entsprechend der Anfrage 3 mindestens ein Datensatz 4 (eine Abbildungsvorschrift und/oder eine Signalsequenz) gelesen und an die Einheit zur Generierung des Ausgabesignals G übermittelt. Die Einheit zur Weiterleitung des Ausgabesignals W an die Beobachterinstanz BI besteht dabei aus mindestens einer Datenleitung, kann aber auch weitere Geräte wie Bildschirme, Lautsprecher und ähnliches beinhalten.

Bei den zu analysierenden Sensor-Signalsequenzen und bei den zu generierenden Ausgabe-Signalsequenzen kann es sich sowohl um Signale derselben Art als auch um verschiedenartige Signale handeln. Ein Beispiel ist die Generierung einer visuellen Werbebotschaft in Abhängigkeit von der Analyse eines Sprachsignals und eines Videosignals, wobei durch die Analyse der Stimme auf das Geschlecht der Person geschlossen wird und die Analyse des Videosignals die räumliche Position, die Konfektionsgröße und die Abbildung des Gesichts der Person in Bildern liefert. So kann eine individuelle Werbebotschaft erzeugt werden, zum Beispiel dadurch, dass das Gesicht der Person auf das Gesicht eines Modells mit der entsprechenden Konfektionsgröße in einem gespeicherten Videoclip abgebildet wird.

Bei einer vorteilhaften Ausführungsform des Systems und des Verfahrens befinden sich einzelne Systemeinheiten nicht notwendigerweise in einer räumlichen Nähe zueinander; vielmehr können die einzelnen Systemeinheiten mit den Datenleitungen so verbunden sein, dass auch ein entfernter Zugriff auf die Systembestandteile möglich ist, zum Beispiel über das Internet.

Bei einer vorteilhaften Ausführungsform des Systems und des Verfahrens werden durch das System Wahrnehmungsereignisse simuliert, die in der Realität durch physikalische Änderungen der Szenerie im Sensorerfassungsbereich entstehen würden.

Bei einer vorteilhaften Ausführungsform des Systems und des Verfahrens wird das originale Sensorsignal zwischengespeichert (Speichereinheit ZS in Fig. 2) und bei der Generierung des Ausgabesignals verwendet.

Bei einer vorteilhaften Ausführungsform des Systems und des Verfahrens ist die Einheit zur Generierung des Ausgabesignals so ausgeführt, dass das Originalsignal des Sensors durch das vom System generierte veränderte Signal ersetzt wird.

Bei einer vorteilhaften Ausführungsform des Systems und des Verfahrens wird die Speichereinheit, in der eine Anzahl von Signalsequenzen und Abbildungsvorschriften gespeichert ist, so ausgeführt, dass sie eine Ansammlung von Szenarios, Handlungsvorschriften, Algorithmen und Methoden enthält.

Bei einer vorteilhaften Ausführungsform des Systems und des Verfahrens können die Vorschriften für die Generierung des Ausgabesignals wie folgt definiert sein:
- die Einheit zur Generierung des Ausgabesignals ist so ausgeführt, dass die Auswahl des zu simulierenden Wahrnehmungsereignisses über eine festgelegte Vorschrift abläuft; und/oder
- die Einheit zur Generierung des Ausgabesignals ist so ausgeführt, dass die Auswahl des zu simulierenden Wahrnehmungsereignisses über einen Zufallszahlengenerator definiert wird; und/oder
- die Einheit zur Generierung des Ausgabesignals ist so ausgeführt, dass die Vorschrift für die Auswahl des zu simulierenden Wahrnehmungsereignisses über eine festgelegte Sequenz der Wahrnehmungsereignisse definiert wird.
   Bei einer vorteilhaften Ausführungsform des Systems und des Verfahrens ist die Einheit zur Generierung des Ausgabesignals so ausgeführt, dass Situationen simuliert werden, die in der Realität zum Einleiten von Sicherheitsmaßnahmen führen würden.
   Bei einer vorteilhaften Ausführungsform des Systems und des Verfahrens ist die Einheit zur Generierung des Ausgabesignals so ausgeführt, dass Störungen simuliert werden, die in der Realität durch Fehlfunktionen des Sensors und/oder Übertragungsleitungen und sonstiger Geräte verursacht würden.
   Das Testen der Funktionalitäten und der Störungsrobustheit des Analysekerns wird bei der vorteilhaften Ausführung des Systems und des Verfahrens nach einer Kombination der vorstehenden optionalen Merkmale ermöglicht, wobei die optionalen Merkmale,
- dass dem System mindestens eine Einheit RE zur automatischen Erfassung der Reaktionen der Beobachterinstanz 7 hinzugefügt und verwendet wird (Fig. 2) und/oder
- dass eine automatische Auswertung der erfassten Reaktionen 8 der Beobachterinstanz BI in mindestens einer entsprechenden Einheit B stattfindet (Fig. 2),
   gleichzeitig oder unabhängig voneinander eine allgemeine Interaktivität der Beobachterinstanz mit dem System beschreiben.
   Bei einer vorteilhaften Ausführungsform des Systems und des Verfahrens findet eine lokale Speicherung und/oder eine nachrichtentechnische Formulierung und Weiterleitung der erfassten Reaktionen 8 der Beobachterinstanz BI und/oder der Ergebnisse der Reaktionsauswertung 9 in einer entsprechenden Einheit SR statt (Fig. 2).
   Bei einer vorteilhaften Ausgestaltung des Systems und des Verfahrens nach einer Kombination der vorstehenden optionalen Merkmale kann das entwickelte System für eine Bewertung der Analysequalität und der Störungsrobustheit von allen Arten der automatischen Analysesystemen und insbesondere für das Testen und das Training von automatischen und nicht automatischen Überwachungs- und Alarmsystemen verwendet werden.
   Bei den automatischen Analysesystemen können das System und das Verfahren sowohl dem Zweck einer Unterstützung in der Entwicklungsphase, als auch dem Zweck einer unabhängigen Qualitätskontrolle und einer Fehlersuche bei den bereits installierten Systemen dienen sowie eine Hilfestellung bei der Entscheidung zwischen Systemen verschiedener Anbieter leisten.
   Eine besonders vorteilhafte Ausführung des Systems und des Verfahrens betrifft die Verwendung als Sensor eines Sensors zur Erfassung von elektromagnetischer Strahlung und zur Generierung von Bilddaten, insbesondere einer Videokamera oder einer Filmkamera.
   Bei einer vorteilhaften Ausführungsform des Systems und des Verfahrens wird als Sensor mindestens ein Instrument zur Erfassung von elektromagnetsicher Strahlung und zur Generierung von Bildsequenzen verwendet.
   Bei einer vorteilhaften Ausführungsform des Systems und des Verfahrens ist die Einheit zur Generierung des Ausgabesignals so ausgeführt, dass die gezielte Einflussnahme auf das Sensorsignal im Verbergen, Verdecken oder Ersetzen der Originalbilder oder Bildfragmente des Sensors durch andere virtuelle Objekte sowie sonstigem Einfügen der virtuellen Objekte in das Sensorsignal besteht.
   Bei einer vorteilhaften Ausführungsform des Systems und des Verfahrens ist die Einheit zur Speicherung von Signalsequenzen und Abbildungsvorschriften so ausgeführt, dass in der Datenbank eine Ansammlung von virtuellen Objekten, die Personen, Tiere, Pflanzen und Gegenstände sowie Werbe- und/oder Testsituationen und ähnliches darstellen, enthalten ist.
   Die von diesen Sensoren gelieferten Bildsequenzen können mit Hilfe von Ansätzen aus Computer Vision ausgewertet werden. Dabei können vielfältige Informationen gewonnen werden, wie zum Beispiel die zweidimensionale Abbildungen der dreidimensionalen Objekte im Erfassungsbereich der Sensoren, die Bewegungsrichtungen von Personen, die Entscheidung, ob es sich bei einer Person um ein Kind oder einen Erwachsenen handelt usw.
   Abhängig von den Analyseergebnissen können Werbebotschaften oder Testsituationen aus einer Datenbank ausgewählt oder mit Hilfe von Ansätzen aus Computer Graphics neu erstellt werden, wobei die bei der Analyse gewonnenen Daten verwendet werden, zum Beispiel dadurch, dass die zweidimensionale Abbildung der Person aus der Sensor-Bildsequenz extrahiert und in eine Werbebotschaft oder Testsituation integriert wird.
   Die Werbebotschaften können vielfältig gestaltet werden. Die Person sieht sich an einem Schaufenster-Bildschirm plötzlich am Strand statt im Supermarkt, bei der Annäherung eines Kindes an eine Werbetafel wird die Zigaretten-Werbung automatisch durch eine Süßigkeiten-Werbung ausgetauscht usw.
   Eine besonders vorteilhafte Ausführung des Systems und des Verfahrens ergibt sich bei der Verwendung von mindestens zwei Kameras mit sich teilweise überlappenden Erfassungsbereichen: So werden aus den synchronisierten Bildsequenzen mit Hilfe von stereobasierenden Bildanalyse-Techniken Entfernungs- und Tiefeninformationen gewonnen, die eine komplexere Analyse der Szenerie und besonders realistische Darstellung der Personen im generierten Ausgabesignal erlauben.
   Bei der Verwendung mindestens eines Zusatzgeräts für die Darstellung dreidimensionaler Informationen, insbesondere von dreidimensionalen Ausgabesignal-Sequenzen, können besonders hochwertige Werbebotschaften erzeugt werden. Die Neuartigkeit und die bisher eingeschränkte Verbreitung der 3D-Technologien führt zwangsläufig zu einem hohen Merkwert und hohen Beachtungsraten dieser Reklame.
   Bei vorteilhaften Ausführungen des Systems und des Verfahrens werden als Sensoren
- mindestens eine Infrarot-Kamera,
- mindestens ein Instrument zur Erfassung von Schallwellen,
- mindestens ein optisch-mechanischer oder mindestens ein optoelektronischer Scanner,
- mindestens ein Laser-Scanner,
- mindestens ein Radar oder
- mindestens ein Terahertzwellen-Detektor oder auch
- mindestens eine Kombination aus verschiedenen Sensoren
   verwendet.

Besondere Vorteile ergeben sich für die Werbeinserenten durch die Möglichkeit des Ansatzes von vorhandenen Gerätschaften: Zum Beispiel kann ein bestehendes System der Videoüberwachung mit einer Mehrzahl an Videokameras und Speichereinheiten durch Hinzunahme von wenigen weiteren Geräten für die Anzeige der Werbebotschaften wie Fernsehgeräten, LCD-Bildschirmen, Projektoren und Einheiten erfindungsgemäß auf ein kostengünstiges, effizientes und neuartiges Werbesystem und -verfahren erweitert werden.

Im Weiteren werden einige vorteilhafte Ausführungsbeispiele vorgestellt.

Bei dem ersten Ausführungsbeispiel handelt es sich um ein integriertes Überwachungs-, Informations- und Werbesystem für einen Supermarkt.

Als Sensoren zur Erfassung von realen Welt dienen bei dem System vor allem die Videokameras, die an den besonders für die Überwachung und die Werbung relevanten Stellen der Räumlichkeiten aufgehängt sind. Die Videokameras sind so platziert, dass die generierten Videosequenzen für eine Auswertung mit Ansätzen von Computer Vision und eine möglicherweise notwendige Rekonstruktion des Signals mit Ansätzen aus Computer Graphics geeignet sind.

Die von den Videokameras generierten Bildsequenzen werden zentral, verteilt oder dezentral von einer Analyseeinheit verarbeitet, wobei unterschiedliche Kontextdaten wie das Vorhandensein einer Person in dem Erfassungsbereich der Kamera, das Geschlecht, die Größe der Person, die Bewegungsrichtung, die Geschwindigkeit, die Beschleunigung, die zweidimensionale Abbildung von Gesichtern im Bild, die Positionen von Augen und die Blickrichtung, usw. gewonnen werden.

Abhängig und mit Hilfe von diesen Informationen werden Werbebotschaften aus einer zentralen, verteilten oder dezentralen Datenbank ausgewählt und ggf. verändert. Je nach dem beworbenen Produkt und der Qualität der Auswertung kann, zum Beispiel, die Abbildung der Person künstlich in eine Bildsequenz aus der Datenbank oder die Abbildung eines Produktes aus der Datenbank in die originale Sensorsequenz eingefügt werden.

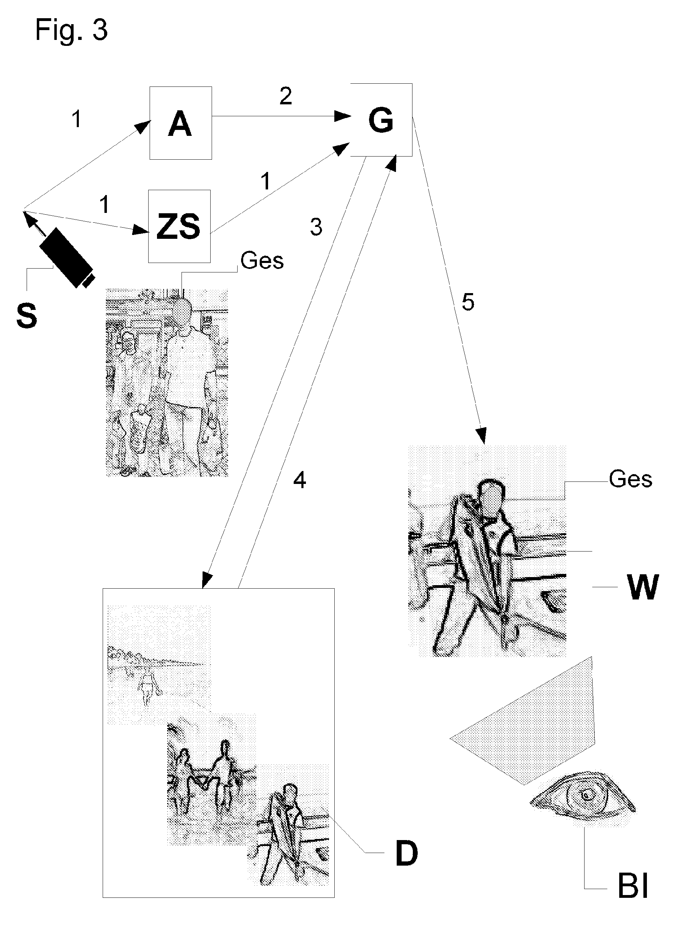

Ein Beispiel ist in Fig. 3 dargestellt: Die Umgebung vor dem Kaufhaus-Schaufenster wird von einer Videokamera S beobachtet, wobei eine Bildsequenz 1 erzeugt wird. Die Bildsequenz 1 wird in der Speichereinheit ZS zwischengespeichert. In der Analyseeinheit A werden aus den Bildinformationen der Sequenz 1 unterschiedliche Kontextdaten gewonnen, die auf das Vorhandensein von Personen im Erfassungsbereich der Kamera schließen lassen, gleichzeitig werden mögliche Abbildungen der Gesichter von Personen in den Bildern gefunden.

Der beste "Gesichtskandidat" (die Übereinstimmung mit gespeicherten Gesichtsmodellen ist am größten) wird bei der Erstellung der Werbebotschaft verwendet. Aufgrund von weiteren körperlichen Merkmalen (Größe, Kleidung, Haarfarbe) wird auf das mögliche Geschlecht der Person geschlossen. Diese Kontextdaten 2 werden an die Einheit zur Generierung des Ausgabesignals G geschickt. Die Einheit G sendet eine Anfrage 3 an die Einheit zur Speicherung von Signalsequenzen und Abbildungsvorschriften D und verwendet den erhaltenen Datensatz 4 zusammen mit der gespeicherten Bildsequenz bei der Erstellung der Werbebotschaft.

Die individuell generierte Werbebotschaft 5 wird der Beobachterinstanz BI über die Einheit W zur Weiterleitung des Ausgabesignals an die Beobachterinstanz präsentiert. Im beschriebenen Beispiel handelt es sich um einen Angler-Videoclip, bei dem das Gesicht einer Person aus der Personengruppe vor dem Schaufenster auf das Gesicht des Anglers im Werbevideo für Anglerausrüstung abgebildet wird.

Durch das Einbeziehen der Person des Beworbenen in die individuelle Werbebotschaft werden gleich mehrere Anforderungen an die Werbeauftritte an eine sehr einfache Weise erfüllt: Die Aufmerksamkeit des Beworbenen wird geweckt, gleichzeitig wird eine Identifizierung des Beworbenen mit der Werbefigur/mit der Werbebotschaft erreicht. Jede Werbebotschaft wird dadurch statt auf eine breite Zielgruppe auf eine bestimmte Person angepasst. Die Kosten dieser individuellen Werbeauftritte verringern sich sogar:

Das Werbesystem kann auf die beschriebene Art und Weise sehr schnell und kostengünstig in konventionelle Videoüberwachungssysteme integriert werden. Das Anschaffen von Zusatzgeräten wie Informationssäulen, Werbeautomaten ist nicht notwendig. Einen weiteren Vorteil bringt die Möglichkeit einer schnellen Integration von neuen Produkten, speziellen Angeboten usw. und zwar dadurch, dass neue Signalsequenzen in die Datenbank eingelesen werden.

Bei einem geeigneten Aufbau der Datenbank in der Einheit zur Speicherung von Signalsequenzen und Abbildungsvorschriften und bei optionaler Hinzunahme
- mindestens einer Einheit zur Erfassung von Reaktionen der Beobachterinstanz und/oder
- mindestens einer Einheit zur Bewertung von Reaktionen der Beobachterinstanz löst das System aber nicht nur das Problem einer effizienten, kostengünstigen und interaktiven Kundenwerbung, sondern dient auch einer Verbesserung von bestehenden automatischen und teilautomatischen Überwachungs- und Alarmsystemen.

Bei den automatischen Überwachungssystemen kann das System sowohl eine Unterstützung in der Entwicklung- und der Testphase leisten, als auch als ein Werkzeug der unabhängigen Qualitätskontrolle dienen. Die Anzahl von kostenintensiven Realitätstests zwecks Fehlersuche (Aufnehmen von eigenen Videos für verschiedene - hier hunderte - reale Testsituationen) bei den bereits installierten Systemen minimiert. Im Weiteren wird die Vorgehensweise erörtert.

Im allgemeinen werden bei Überwachungssystemen Bildsequenzen, erzeugt von einem oder mehreren Sensoren für elektromagnetische Strahlung (Video- oder Infrarotkameras), welche auf die zu überwachenden Bereiche der realen Welt ausgerichtet sind, auf einem oder mehreren Bildschirmen dargestellt und von einer oder mehreren Personen beobachtet. Beim Auftreten von unerlaubten Situationen in den Sequenzen werden entsprechende Sicherheitsmaßnahmen eingeleitet.

Fast immer ist eine Person für eine Mehrzahl der Bildschirme verantwortlich, so dass Überwachungsqualität im Laufe der Beobachtung durch ein Nachlassen der Aufmerksamkeit abnehmen kann. Eine ungeeignete Anordnung der Sensoren sowie eine ungeeignete Anordnung der Bildsequenzen auf den Bildschirmen und ähnliches können auch zum Nachlassen der Überwachungsqualität führen. Deswegen werden ein System und ein Verfahren zur automatischen Analyse der Überwachungsqualität und der Störungsrobustheit benötigt, was bei unserer Erfindung realisiert ist.

Ein Teil der Datenbank ist eine Kollektion der Simulationen von Situationen, die im Wesentlichen aus einer Ansammlung von virtuellen Objekten und möglichen Szenarios besteht. Diese virtuellen Objekte können (je nach dem Anwendungsbereich) Personen, Tiere, Pflanzen und Gegenstände wie zum Beispiel ein spezielles Produkt, eine bekannte Persönlichkeit, eine rennende Person, ein stehend gelassener Koffer oder auch Situationen wie das Brennen des Waldes, das Auslaufen eines Benzinreservoirs, das Entstehen von Graffiti und ähnliches darstellen. Im Weiteren kann die Datenbank eine Ansammlung von vorteilhaften Werbesequenzen beinhalten, die zum Beispiel Strandszenen oder Waldszenen darstellen.

Die virtuellen Objekte können sowohl aus realen Aufnahmen als auch synthetisch erzeugt werden, wobei sich die Art der Objekte nach dem zu auslösendem Wahrnehmungsereignis richtet. Den virtuellen Objekten werden Beschreibungen zugeordnet, welche die zugeordnete Werbe- und/oder Testsituation, die Objektrepräsentation, die Objekteigenschaften, die Abbildungsvorschrift und die Mischvorschrift definieren.

Bei der Repräsentation der virtuellen Objekte kann es sich zum Beispiel um zweidimensionale Bildrepräsentationen, um Pixellisten oder um zwei- oder dreidimensionale Modelle (eine polygonale Beschreibung mit zugehörigen Texturen) handeln. Die zeitliche Veränderung der virtuellen Objekte kann zum Beispiel durch eine entsprechende Folge von veränderten Bildrepräsentationen oder durch eine Änderungsvorschrift für das Modell beschrieben werden.

Eine einfache Möglichkeit, diese Folgen von Bildrepräsentationen zu erzeugen, ist die Aufnahme einer realen Situation mit Hilfe einer Videokamera bzw. die Verwendung einer Archivaufnahme und die nachfolgende Trennung im Bildmaterial des interessierenden Objektes bzw. Objekte von den Hintergrundbereichen. Die virtuellen Objekte werden mit einem neuen (homogenen) Hintergrund hinterlegt, mit ihren Eigenschaften versehen und gespeichert. Analog können als virtuelle Objekte die vordergrundbefreiten Szenarios gespeichert werden.

Unter Objekteigenschaften sind im Einzelnen die für das Umrechnen der Objekte in das Sensorsignal notwendigen Angaben wie zum Beispiel die Größe, die Helligkeitsverteilung, die Form, die Länge der Sequenz usw. zu verstehen. Die Abbildungsvorschriften geben die Methoden und die mathematischen Funktionen an, mit denen man das virtuelle Objekt in einzelne

Bilder des Sensorsignals umrechnen kann, wie zum Beispiel die Skalierungsfunktion entsprechend der Sensorkalibrierung, Funktionen für das Anpassen der Pixelwerte usw. Bei den Mischvorschriften handelt es sich um Methoden für das Einfügen des virtuellen Objektes in die Sensorsequenz: Es können zum Beispiel ganze oder Teilbilder manipuliert werden, in einem oder mehreren Sensorsignalsequenzen, mit einer größeren oder kleineren Verzögerung usw.

Der zweite Bestandteil der Datenbank ist eine Datenbank der Simulationen von Signalstörungen. Sie beinhaltet im Wesentlichen eine Liste von Methoden, mit denen das Sensorsignal selbst verzerrt werden kann, um Signalstörungen zu simulieren und die Robustheit des Analysesystems gegenüber diesen Signalstörungen zu testen.

Als Situationen können so zum Beispiel ein physikalischer Qualitätsverlust, hervorgerufen durch Sensorstörungen wie ein Signalausfall, eine Defokussierung, eine Verdeckung oder eine Dejustierung des Sensors oder durch Szenenänderungen wie die Lichtänderung, das Einsetzen des Regens usw., nachgebildet werden. Als Methoden können dabei zweidimensionale Filter unterschiedlichster Art wie morphologische Filter, Glättungsfilter, einfache mathematische Funktionen zum Umrechnen der Teilbilder usw. verwendet werden.

Die Auswahl der Werbe- oder Testsituation und/oder der zu testenden Störung wird in der Einheit zur Generierung des Ausgabesignals getroffen. Die Steuerung dieser Auswahl kann nach dem Zufallsprinzip über einen Zufallszahlengenerator oder über eine vordefinierte Sequenz der Wahrnehmungsereignisse geschehen, jeweils unter der Berücksichtigung der Analyseergebnisse mindestens einer Bildsequenz.

Im Weiteren, wenn eine automatische Bewertung der Reaktionen der Beobachterinstanz erwünscht wird, kann während der Initialisierungsphase eine Zuordnung der definierten Analyseergebnisse der Beobachterinstanz den möglichen Werbe- oder Testsituationen durchgeführt werden.

Die Arbeitsphase des Verfahrens wie bereits beschrieben ab: Die Einheit zur Analyse des Sensorsignals extrahiert Kontextinformationen, mit Hilfe derer die Einheit zur Generierung des Ausgangssignals eine Auswahl des zu simulierten Wahrnehmungsereignisses trifft. Die Einheit zur Generierung des Ausgangssignals fordert entsprechende Datensätze in der Einheit zur Speicherung von Signalsequenzen und Abbildungsvorschriften an und generiert mit Hilfe der Datensätze ein Ausgangssignal.

Das Ausgangssignal wird der Beobachterinstanz zugeführt, deren Reaktionen werden vom System erfasst und an die Bewertungseinheit übermittelt, an dieser Stelle mit den erwarteten Ergebnissen verglichen, ggf. gespeichert und weiter geschickt.

Bei dem zweiten Ausführungsbeispiel wird eine Möglichkeit beschrieben, das erfindungsgemäße System und ein entsprechendes Verfahren sehr einfach auf das Training von automatischen Analysesystemen anzupassen, insbesondere von solchen Systemen, die auf den Methoden der künstlichen Intelligenz und speziell auf den Methoden der Künstlichen Neuronalen Netze basieren. Bei solchen Systemen werden die Analyseentscheidungen nicht nur nach einigen starr festgelegten Vorschriften, sondern in der Abhängigkeit von den mit Hilfe von einigen Trainingsdaten "gelernten" Werten getroffen.

Beim Trainingsprozess soll das System lernen, durch einige wenige ausgewählte Eingabemuster ein beliebiges Eingabemuster in das gewünschte Ausgabemuster (hier: eine Entscheidung) zu überführen. Das Trainieren der Künstlichen Neuronalen Netze ist ein komplexer Prozess und erfordert eine große Menge an Trainingsdaten, die für gewöhnlich von den Software-Entwicklern gesammelt oder manuell erzeugt werden und von unserem System zur Verfügung gestellt werden.

Beim dritten Beispiel einer vorteilhaften Ausführung wird das System als ein Werkzeug zu einem automatischen Testen und einer automatischen (unabhängigen) Beurteilung der Qualität von Systemen verschiedener Anbieter eingesetzt, was durch die vorgestellte Erfindung realisiert wird. Die Endkunden, die sich solch aufwendige und kostenspielige automatische Analysesysteme anschaffen wollen, können vor der Kaufentscheidung diese Systeme "auf alle Eventualitäten des Lebens" testen und die Beurteilung der Funktionalitäten der Systeme auf objektive Gütekriterien stützen.

Das kostenintensive Anschaffen von neuen Gerätschaften kann sogar weitgehend erspart werden, wenn sich gemäß einer bevorzugten Ausgestaltung des Systems und des Verfahrens einzelne Systemeinheiten nicht notwendigerweise in einer räumlichen Nähe zueinander befinden, sondern die einzelnen Systemeinheiten mit den Datenleitungen so verbunden sind, dass auch ein entfernter Zugriff auf die Systembestandteile möglich ist, zum Beispiel über das Internet.

Bei dieser System- und Verfahrensvariante können nicht nur die Ein- und Ausgabegeräte der Inserenten, sondern auch die der Beworbenen verwendet werden, und zwar mit Hilfe von neuen Kommunikationstechnologien, wobei als Sensoren die Webkameras und als Anzeigegeräte die Monitore der Beworbenen verwendet werden. Die Bilddaten des Beworbenen werden entweder per Datenverbindung an den Inserenten geschickt, bei dem Inserenten in eine Werbebotschaft integriert und zurück an den Beworbenen gesendet, möglicherweise verbunden mit zusätzlichen Serviceangeboten.

Dies kann auch so realisiert werden, dass der Beworbene eine Aufspaltung der Software mit Werbebotschaften und eingeschränkten Funktionalitäten (wie die Verarbeitung nur mitgelieferten Hintergrundsequenzen) erhält und die individuellen Werbebotschaften bei der Verwendung der Software selbst generiert.

Ein weiterer Vorteil ergibt sich durch einen passiven Schutz vor Vandalismus. Das Problem von Vandalismus ist besonders bei Werbesystemen aktuell, die eine Interaktivität mit dem Beworbenen/dem Benutzer wünschen oder voraussetzen. Die Interaktivität wird für gewöhnlich durch einen direkten physikalischen Kontakt (Tastatur, Maus, Touch-Screen-Bildschirm usw.) erreicht, was diese Systeme angreifbar macht.

Da bei dem Einsatz von Sensoren für die Erfassung der Reaktionen einer Beobachterinstanz für das Erreichen einer Interaktivität mit dem System der physikalische Zugriff auf die Systemgestaltung nicht benötigt wird, können diese außer der direkten Reichweite der möglichen Randalierer platziert und so zusätzlich geschützt werden. Bei den Sensoren kann es sich um die bereits genannten Videokameras, Bewegungsmelder, Mikrofone etc. handeln.

Das erfindungsgemäße System kann sehr schnell an unterschiedliche Anwendungsbereiche angepasst werden: Es ist in vielen Situationen, bei denen Bereiche der realen Welt mit Hilfe von Sensoren überwacht werden, erwünscht, statt oder zusammen mit der originalen Sensor-Signalsequenzen ein von der Auswertung der Sensor-Signalsequenzen abhängiges Signal auszugeben. Ein Beispiel dafür ist die Verwendung von Terahertzwellen-Detektoren zu Sicherheitszwecken bei einer Personen-Kontrolle:

Das Ausgeben des vollständigen Detektorbildes, wobei die Person auf dem Bild unbekleidet erscheint, kann zur Verletzung von persönlichen Rechten führen. Statt dessen könnte man eine Signalanalyse-Einheit zwischen dem Sensor und der Bildanzeige schalten, so dass das Gerät selbst die Entscheidung treffen könnte, ob sich verdächtige Materialien am Körper befinden und nur selektiv diese Bildabschnitte anzeigen würde.

Einige weiteren vorteilhaften Anwendungsmöglichkeit betreffen den Einsatz des Systems in Situationen, in denen eine direkte Weiterleitung des Sensorsignals an einen menschlichen Beobachter nicht erwünscht oder aus rechtlichen Gründen nicht möglich ist. Beim ersten Fall werden vor allem die Anwendungen gemeint, bei denen das Sensorsignal selbst durch einen Menschen immer oder zeitweise schlecht auswertbar ist, zum Beispiel deswegen, dass seine Stärke starken Schwankungen unterworfen ist, wie bei den Geräuschen, die ein Baby produziert. Beim zweiten Fall kann es sich um Anwendungen im Sicherheitsbereich handeln, zum Beispiel bei den Flughafenkontrollen mit den Terahertzwellen-Detektoren, wie oben beschrieben wurde.

Die vorliegende Erfindung betrifft schließlich die Verwendung mindestens eines Systems gemäß der vorstehend dargelegten Art und/oder des Verfahrens gemäß der vorstehend dargelegten Art beim automatischen Auslösen eines Wahrnehmungsereignisses bei mindestens einer Beobachterinstanz.

### Bezugszeichenliste

- 1: Sensorsignal
- 2: Kontextinformationen und/oder Ergebnisse der Analyse des Sensorsignals 1
- 3: Anfrage an die Einheit D
- 4: Datensatz, insbesondere Signalsequenz und/oder Abbildungsvorschrift
- 5: Ausgabesignal oder verändertes Sensorsignal
- 6: Datensatz
- 7: Reaktionen der Beobachterinstanz BI
- 8: Datensatz, der Reaktionen der Beobachterinstanz BI beschreibt
- 9: Ergebnis des Vergleichs
- A: Einheit zur automatischen Analyse des Sensorsignals 1
- B: Bewertungseinheit
- BI: Beobachterinstanz
- D: Einheit zur Speicherung von Signalsequenzen und Abbildungsvorschriften 4
- G: Einheit zur Generierung des Ausgabesignals oder veränderten Sensorsignals 5
- Ges: Abbildung des Gesichtes einer Person in der Bildsequenz
- RE: Einheit zur Erfassung der Reaktionen 7 der Beobachterinstanz BI
- S: Sensor zur Erfassung von Umgebungsdaten
- SR: Einheit zur Speicherung der Reaktionen 7 der Beobachterinstanz BI
- W: Einheit zur Weiterleitung des Ausgabesignals oder veränderten Sensorsignals 5 an die Beobachterinstanz BI
- ZS: Einheit zur Speicherung des Sensorsignals 1

## Patentansprüche

1. System zum automatischen Auslösen eines Wahrnehmungsereignisses bei mindestens einer Beobachterinstanz (BI),
**gekennzeichnet durch**
- mindestens einen Sensor (S) zur Erfassung von Umgebungsdaten,
- mindestens eine Einheit (A) zur automatischen Analyse des Sensorsignals (1),
- mindestens eine Speichereinheit (D), in der eine Anzahl von Signalsequenzen und Abbildungsvorschriften gespeichert ist,
- mindestens eine Einheit (G) zur Generierung des Ausgabesignals oder veränderten Sensorsignals (5) sowie
- mindestens eine Einheit (W) zur Weiterleitung des Ausgabesignals oder veränderten Sensorsignals (5) an die Beobachterinstanz (BI).

2. System gemäß Anspruch 1, **dadurch gekennzeichnet,**
- **dass** die Beobachterinstanz (BI) mindestens ein menschlicher Beobachter und/oder mindestens eine automatische Einheit zur Analyse des Sensorsignals (1) sein kann und
- **dass** keine ausdrückliche Kooperation der Beobacherinstanz (BI) zur Erfüllung der Funktionalitäten des Systems notwendig ist.

3. System gemäß Anspruch 1 oder 2, **gekennzeichnet durch** mindestens eine Einheit (ZS) zur Speicherung von Sensor-Signalsequenzen (1), wobei das gespeicherte Signal bei der Generierung des Ausgabesignals oder veränderten Sensorsignals (5) verwendet wird.

4. System gemäß mindestens einem der Ansprüche 1 bis 3, **dadurch gekennzeichnet, dass** die Speichereinheit (D), in der eine Anzahl von Signalsequenzen und Abbildungsvorschriften gespeichert ist, so ausgeführt ist, dass sie eine Ansammlung von Szenarios, Handlungsvorschriften, Algorithmen und Methoden enthält.

5. System gemäß mindestens einem der Ansprüche 1 bis 4, **gekennzeichnet durch** mindestens eine Einheit (RE) zur automatischen Erfassung der Reaktionen (7) der Beobachterinstanz (BI).

6. System gemäß mindestens einem der Ansprüche 1 bis 5, **gekennzeichnet durch** mindestens eine Einheit (B) zur automatischen Auswertung der Reaktionen (7) der Beobachterinstanz (BI).

7. System gemäß mindestens einem der Ansprüche 1 bis 6, **gekennzeichnet durch** mindestens eine Einheit (SR) zur lokalen Speicherung und/oder zur nachrichtentechnischen Formulierung und Weiterleitung der Reaktionen (7) der Beobachterinstanz (BI) und/oder der Ergebnisse der Reaktionsauswertung.

8. System gemäß mindestens einem der Ansprüche 1 bis 7, **dadurch gekennzeichnet, dass** als Sensor (S) bzw. Sensoren (S) unabhängig voneinander oder in Kombination
- mindestens ein Instrument zur Erfassung von elektromagnetsicher Strahlung und zur Generierung von Bildsequenzen und/oder
- mindestens eine Video- oder eine Filmkamera und/oder
- mindestens zwei Video- oder Filmkameras mit sich teilweise überlappenden Erfassungsbereichen und/oder
- mindestens eine Infrarotkamera und/oder
- mindestens ein Instrument für die Erfassung von Schallwellen und/oder
- mindestens ein optisch-mechanischer oder optoelektronischer Scanner und/oder
- mindestens ein Laser-Scanner und/oder
- mindestens ein Radar und/oder
- mindestens ein Terahertzwellen-Detektor und/oder
vorgesehen ist bzw. vorgesehen sind.

9. Verfahren zum automatischen Auslösen eines Wahrnehmungsereignisses bei mindestens einer Beobachterinstanz (BI),
**dadurch gekennzeichnet,**
- **dass** die Beobachterinstanz (BI) mindestens ein menschlicher Beobachter und/oder mindestens eine automatische Einheit zur Analyse des Sensorsignals (1) sein kann und
- **dass** keine ausdrückliche Kooperation der Beobacherinstanz (BI) zur Erfüllung der Funktionalitäten des Verfahrens notwendig ist.

10. Verwendung mindestens eines Systems gemäß mindestens einem der Ansprüche 1 bis 8 und/oder des Verfahrens gemäß Anspruch 9 beim automatischen Auslösen eines Wahrnehmungsereignisses bei mindestens einer Beobachterinstanz (BI).
